Europäisches Patentamt

(19) European Patent Office

Office européen des brevets

(11) **EP 0 823 740 A1**

(12) **EUROPEAN PATENT APPLICATION**

(43) Date of publication:
**11.02.1998 Bulletin 1998/07**

(51) Int. Cl.$^6$: **H01M 2/16**, B32B 27/32

(21) Application number: **97113558.7**

(22) Date of filing: **06.08.1997**

(84) Designated Contracting States:
**AT BE CH DE DK ES FI FR GB GR IE IT LI LU MC NL PT SE**

(30) Priority: **06.08.1996 JP 207078/96**
**27.01.1997 JP 12121/97**

(71) Applicant: **UBE INDUSTRIES, LTD.**
**Ube-shi, Yamaguchi-ken 755 (JP)**

(72) Inventors:
• **Kurauchi, Hiroshi,**
**c/o Ube Industries, Ltd.**
**Ube-shi, Yamaguchi (JP)**

• **Fujii, Teruaki,**
**c/o Ube Industries, Ltd.**
**Ube-shi, Yamaguchi (JP)**
• **Shimada, Junichi,**
**c/o Ube Industries, Ltd.**
**Ube-shi, Yamaguchi (JP)**

(74) Representative:
**Weisert, Annekäte, Dipl.-Ing. Dr.-Ing.**
**Patentanwälte**
**Kraus Weisert & Partner**
**Thomas-Wimmer-Ring 15**
**80539 München (DE)**

(54) **Porous polyolefin film laminate**

(57) A porous polyolefin film laminate favorably employable as a separator film for a nonaqueous lithium ion battery is composed of at least three polyolefin films, in which at least one polyolefin film preferably is a polyethylene film and at least two polyolefin films preferably are polypropylene films. The polyolefin films are combined to form a united film laminate having a pore volume of 30-80%, a maximum pore size of 0.02-2 μm, a shutdown temperature lower than the melting point of the polyethylene film by 1-5°C. The porous polyolefin film laminate can be prepared by heating the polypropylene film and the polyethylene film independently, combining the films under pressure and heating, stretching twice the combined films at a relatively low temperature and then at a relatively high temperature, and fixing the stretched film.

EP 0 823 740 A1

## Description

### FIELD OF THE INVENTION

The present invention relates to a porous polyolefin film laminate having uniform micropores. In particular, the invention relates to a porous polyolefin film laminate which is favorably employable as a battery separator to be incorporated into batteries such as a lithium-ion battery.

### BACKGROUND OF THE INVENTION

Porous polyolefin films are employed in various fields of art. For instance, a porous polyolefin film is employed as a battery separator in nonaqueous batteries such as a lithium-ion battery (i.e., lithium cell), a separator in electrolytic condensers, an insulator in electronic devices, an artificial lung diaphragm, a plasma purifier, a respiratory clinical clothing, a filter for separating microorganisms and virus from water, a separator for gaseous mixtures, or a filter of air-conditioner.

Heretofore, most of porous polyolefin films comprise a single ply porous film. The single ply porous film is easily prepared, but is not satisfactory in its characteristics in certain fields. For instance, it is now understood that a singly ply porous film cannot satisfy the enhanced retirements for battery separators of non-aqueous batteries, especially, a lithium-ion battery.

In a battery such as a nonaqueous battery, a separator is placed to obviate production of short circuit between a positive electrode and a negative electrode. As the nonaqueous battery, a lithium battery (i.e., lithium-ion secondary cell) has been paid specific attention and studied widely. The lithium battery comprises a negative electrode of metallic lithium, an alloy of lithium and other metal, an organic material such as carbon or graphite which is adsorbable of lithium ion or storable of lithium ion by intercalation, an electroconductive polymer doped with lithium ion, or the like; a positive electrode of a fluorinated graphite represented by $(CF_x)_n$, a metal oxide such as $MnO_2$, $V_2O_5$, $CuO$, $Ag_2CrO_4$ or $TiO_2$, a sulfide or a chloride; and a nonagueous electrolyte solution comprising an electrolyte such as $LiPF_6$, $LiBF_4$, $LiClO_4$ or $LiCF_3SO_3$ in an organic solvent such as ethylene carbonate, propylene carbonate, $\gamma$-butyrolactone, acetonitrile, 1,2-dimethoxyethane or tetrahydrofuran.

It is known that lithium is very reactive. Accordingly, if an abnormal electric current flows in the lithium battery due to production of external short circuit or erroneous connection, the temperature of the battery rapidly increases and causes thermal damage of a device equipped with the lithium battery. In order to obviate such troubles, a battery separator (also called simply "separator") is placed between the positive and negative electrodes. Examples of the known separators are as follows:

1) Porous single ply (i.e., mono-ply) film of thermoplastic resin such as polyethylene or polypropylene, as disclosed in GB 1180066, USP 3,679,538, USP 4,190,707, USP 5,173,235, Japanese Patent Publications No. 46-40119, No. 55-32531, and No. 59-37292, and Japanese Patent Provisional Publications No. 60-23954 and No. H2-75151;

2) Porous film of a mixture of polyethylene polymers having different molecular weight or a mixture of polyethylene and polypropylene, as disclosed in EP-A-565938, and Japanese Patent Provisional Publications No. H2-21559, No. H2-334309, and No. H5-331306;

3) Porous film having a support of thermoplastic resin or non-woven fabric, as disclosed in EP-A-336170, and Japanese Patent Provisional Publications No. H3-245457 and No. H1-258358;

4) Laminated multi-layer porous film composed of plural porous films of different material, as disclosed in USP 4,650,730, and Japanese Patent Provisional Publications No. 62-10857, No. 62-53813, No. 63-308866, and No. H6-20671; and

5) Laminated multi-layer porous film made by combining two porous films via adhesive or by application of heat and pressure.

The porous battery separator film functions primarily to separate one electrode from another electrode for obviating the production of short circuit between them under the condition that the electric voltage is kept at the predetermined level. The porous separator film also functions to terminate flow of ion between both electrodes by closing its pores when the inner temperature of the battery elevates beyond the predetermined safety temperature level due to production of abnormal electric current, so that serious troubles owing to the abnormally elevated temperature such as occurrence of fire can be prevented. The obviation of troubles caused by the abnormally elevated temperature is a very important function for the separator of batteries. The function of the porous separator film to close its pores is generally called "pore closing" or "shutdown (SD)". The shutdown (SD) is confirmed by a gas permeability (which is also referred to as "gas permeation rate") of the tested porous film to reach 6,000 in terms of Gurley Number (defined in ASTM D-726).

A battery separator film for lithium battery should have an appropriate shutdown temperature range such as the range of 110 to 160°C, preferably 120 to 150°C. If the shutdown temperature is too low, the ionic flow is disturbed when a minor temperature increase takes place. A battery showing such behavior is not practically acceptable. If the shutdown temperature is too high, the lithium battery may cause fire or other serious troubles.

The separator film for lithium battery further is ought to have a thermal durability to maintain the shutdown condition up to a certain temperature. In more detail, even if the separator closes its pores to shut down the electric current, the temperature may further elevate to a certain extent after the shutdown takes place. If the separator film has insufficient thermal durability against such heat elevation, the film may be easily melted and broken down in part when the inner temperature of the battery further elevates beyond the shutdown temperature. If the separator is broken down, the ionic flow again starts and additional temperature elevation cannot be prevented. Accordingly, the separator should have enough thermal durability to keep the shutdown condition up to a temperature as high as possible.

A battery separator film should further have low electric resistance, high mechanical strength such as high elastic recovery, little variation of film thickness, and little variation of the electric resistance, in addition to the above-mentioned appropriate shutdown characteristics.

As battery separator films, there have been proposed a great number of materials, as described hereinbefore. However, according to studies of the present inventors, more improvement is required. In more detail, the single ply porous polypropylene film has a shutdown temperature of 170°C or higher, which is disadvantageously close to the melting point of lithium, while the single ply porous polyethylene film has an appropriate shutdown temperature of approximately 135°C. However, the single ply porous polyethylene film has poor thermal durability such as a low melting temperature of approximately 145°C. Moreover, the single ply porous polyethylene film has poor elastic recovery to result in excessive stretching of the film in its incorporation into a battery. Therefore, its productivity and workability are low. Thus, the single ply porous films of thermoplastic resins require improvement, particularly in their safety reliability.

The known single ply porous film of a mixture of polyethylene polymers having different molecular weight has a thermal durability up to approximately 150°C and an elastic recovery of approximately 3,400 kg/cm$^2$, which are only slightly improved, as compared with the above-mentioned single ply porous polyethylene film. The known single ply porous film of a mixture of polyethylene and polypropylene having a sea-island structure shows a thermal stability up to approximately 180°C and an elastic recovery of approximately 4,200 to 6,400 kg/cm$^2$, which are further improved in its shutdown and mechanical characteristics, as compared with the above-mentioned single ply porous polyethylene mixture film. Nevertheless, the improvement is still not satisfactory. Moreover, there is another disadvantage in that the porous film formed by stretching the film of the sea-island structure is apt to vary in its product quality, and reproducibility is low.

The porous film on a support of non-woven fabric or the like which is also known has a disadvantage in its safety which is caused by its support material. Also disadvantageous is that insufficient thermal durability is seen as is in the case using a single ply porous polyethylene or polypropylene film.

The known laminated multi-layer porous film comprising a plurality of porous films of different thermoplastic resin has been developed to solve the problems observed in the use of the singly ply thermoplastic film and is prepared by the steps of stretching independently plural films of different thermoplastic resins to form a porous structure in their bodies, combining the produced porous films together using an adhesive or under pressure. Theoretically, thus produced multi-layer porous film should have sufficient characteristics required for the use as a battery separator. However, it is not easy to produce in the actual production line a porous laminated film having satisfactory characteristics. For instance, it is not easy to combine appropriately the porous films to each other under pressure or even using an adhesive. If the porous films are heated for firmly combining them under pressure, not a small portion of the pores are closed. Further, the pores in one film sometimes does not well communicate with the pores in another film laminated thereon, and the expected continuous porous structure is scarcely formed. Thus prepared porous laminated films having poor continuous porous structure produce unfavorable high electric resistance in the battery. Application of a low pressure, a small amount of an adhesive, or a low thermal energy to the laminated porous films to obviate the closure of pores gives a laminated film having poor resistance to film separation. In other words, the component film plies of the laminated porous film showing poor resistance to film separation are easily separated from each other when the laminated film is introduced into a battery. Further deformation of the laminated film such as curling, shrinkage, or elongation sometimes takes place in the procedure of introducing the laminated film into a battery.

Japanese Patent Provisional Publication No. H6-55629 describes a porous multi-layer film which is prepared by combining a plurality of unstretched polymer films having different melting points after heating and then stretching the combined films to produce pores in the films.

Japanese Patent Provisional Publication No. H7-304110 describes a process for the preparation of a porous polyolefin laminate which comprises the steps of: combining at least three polyolefin films which comprise at least one polyethylene film and at least one polypropylene film being placed in contact with the polyethylene film under pressure at a temperature of 120 to 140°C to form a united film structure; heating the united film structure to a temperature of 110 to 140°C; stretching the heated film structure at a temperature of -20°C to +50°C by 5 to 200%; stretching further the once stretched film structure at a temperature of 70 to 130°C by 100 to 400%; and heating the last stretched film structure at a temperature higher than the last stretching temperature by 5 to 45°C. The porous polyolefin laminate obtained by this process comprises at least three united polyolefin layers, at least one polyolefin layer being a polyethylene layer and at least one polyolefin layer being a polypropylene layer which is placed in contact with the polyethylene layer, said three united polyolefin layers being combined to form a united structure with a peel strength of at least 3 g/15 mm, which has a pore volume in the range of 30 to 80%, a maximum pore size in the range of 0.02 to 2 μm, a shutdown temperature in the range of 135 to 140°C, and a durability to maintain the shutdown condition up to at least 180°C.

SUMMARY OF THE INVENTION

The present invention has an object to provide an improved porous polyolefin film laminate.

Particularly, the invention has an object to provide an improved porous polyolefin film laminate having relatively uniform micropores, an appropriate shutdown temperature, a high thermal durability, a property to keep the shutdown condition for a wide temperature range, high resistance to film separation, and a high elastic recovery.

Specifically, the invention has an object to provide an improved porous polyolefin film laminate which is favorably employable as a battery separator to be installed into nonaqueous batteries such as a lithium-ion battery.

The present invention resides in a porous polyolefin film laminate comprising at least three polyolefin films, at least two of which are polyolefin films I and at least one of which a polyolefin film II having a melting point lower than those of the polyolefin films I by at least 20°C, the polyolefin film II being sandwiched with the polyolefin films I, said at least three polyolefin films being combined to form a united laminate which has a pore volume in the range of 30 to 80%, a maximum pore size in the range of 0.02 to 2 μm, and a shutdown temperature which is lower than the melting point of the polyolefin film II by 1-5°C. The shutdown temperature was determined under the condition that both ends of the polyolefin film along the longitudinal direction (MD: machine direction) are restrained to keep the predetermined film length from variation.

In the porous polyolefin film laminate of the present invention, the polyolefin films I preferably are stretched polypropylene films and the polyolefin film II preferably is a stretched polyethylene film.

In the porous polyolefin film laminate of the invention, the shutdown can be attained by heat shrinkage of the polyolefin film II.

In the porous polyolefin film laminate of the invention, the film laminate preferably shows a thermal durability to maintain the shutdown condition up to at least 180°C, a peel strength of at least 3 g/15 mm, and a gas permeability in the range of 150 to 1,500 in terms of Gurley Number.

The porous polyolefin film laminate of the invention can be prepared by a process comprising the steps of:

heating a polyolefin film I to a temperature lower than its melting point by 35-55°C under the condition of essentially tension free;
heating a polyolefin film II to a temperature lower than its melting point by 30-55°C under the condition of essentially tension free, the polyolefin film II having a melting point lower than the melting point of the polyolefin film I by at least 20°C;
combining at least three polyolefin films which comprise at least one heated polyolefin film I and at least one heated polyolefin film II under pressure at a temperature between the melting point of the polyolefin film II and a temperature higher than the melting point of the polyolefin film II by 10°C, to form a united film laminate;
stretching the united film laminate at a temperature of -20°C to +50°C by 5 to 200%;
stretching further the once stretched film laminate at a temperature of 70 to 130°C by 100 to 400%; and
heating the last stretched film laminate for fixing the stretched state, optionally after shrinking the last stretched film laminate up to 50%.

BRIEF DESCRIPTION OF THE DRAWINGS

Figure shows a pore size distribution of the porous polyolefin film laminate of Example 1 and a pore size distribution of the porous polyolefin film laminate of Comparison Example 1.

DETAILED DESCRIPTION OF THE INVENTION

The present invention resides in an improvement of a porous polyolefin film laminate comprising plural polyolefin films. The porous structure of the porous polyolefin film laminate of the invention can be formed by stretching a united polyolefin films under specific conditions. In the united polyolefin films of the multilayer film of the invention, at least one polyolefin film preferably is a polyethylene film or other polyolefin film having a relatively low melting point (i.e., polyolefin film II), and at least two polyolefin films preferably are polypropylene films or other polyolefin films having a relatively high melting point (i.e, polyolefin I). The polyethylene film is preferably arranged between the polypropylene films. The united polyolefin films comprise three or more (e.g., four, five, and so on) polyolefin films. When two or more polypropylene films are incorporated into the united structure, each polypropylene film can have different molecular weight and different characteristics. When two or more polyethylene films are incorporated into the united structure, each polyethylene film also can have different molecular weight and different characteristics.

The polypropylene which forms the polypropylene film preferably has a high stereo regularity. The polyethylene preferably is a high-density polyethylene, but an intermediate density polyethylene also can be employed. The polypropylene and polyethylene preferably are homopolymers, but copolymers can be employable. The polypropylene and polyethylene can contain surfactants, antioxidants, plasticizers, flame retardants, colorants, and other additives. However, the polypropylene and polyethylene preferably contain no fillers.

The polyolefin film I can be a poly(4-methylpentene-1) or a poly(3-methyl-butene-1), and the polyolefin film II can be a polybutene film or an ethylene-propylene copolymer film.

The united polyolefin films can be prepared favorably by once heating the polyolefin film I and polyolefin film II separately and then combining thus heat treated three or more polyolefin films by heating them under pressure. The polyolefin film can be preferably prepared by melt extrusion using a T-die. An inflation method and a wet extrusion method also are employable.

Each polyolefin film can be prepared by a melt extrusion method using a T-die at a temperature higher than the melting temperature of the employed polyolefin by 20 to 60°C, and at a draft ratio of 10 to 1,000, preferably 200 to 500. The haul-off speed generally ranges from 10 to 50 m/min., but this range is not limitative.

The polyolefin films prepared in the above-mentioned manner are heated before the films are combined to give a polyolefin film laminate.

The heat treatment of the polyolefin film should be performed under the condition of essentially tension free. If substantial tension is applied to the polyolefin film when it is heated, the desired birefringence and/or elastic recovery cannot be imparted to the heated film and the finally produced porous polyolefin film laminate is apt to give relatively poor characteristics. Therefore, it is preferred that the polyolefin film in the form of a continuous film and wound around a core roll is *per se* subjected to the heat treatment.

The heat treatment of the polyolefin film I (e.g., polypropylene film) should be made at a temperature lower than its melting point by 35-55°C, while the heat treatment of the polyolefin film II (which has a melting point lower than the melting point of the polyolefin film I by at least 20°C, e.g., polyethylene film) should be made at a temperature lower than its melting point by 30-55°C.

It has been confirmed that the characteristics of the resulting porous polyolefin film laminate, such as pore sizes, pore volume (or porosity), resistance to separation of the polyolefin films, and mechanical strength, are greatly influenced by birefringence and elastic recovery of the films to be combined and then stretched. The heat-treated polypropylene film (or other polyolefin film I) preferably has a birefringence of $15 \times 10^{-3}$ to $21 \times 10^{-3}$ (more preferably $17 \times 10^{-3}$ to $20 \times 10^{-3}$) and preferably shows an elastic recovery of 80 to 94% (more preferably 84 to 92%) at 100% elongation of the film. The heat-treated polyethylene film (or other polyolefin film II) preferably has a birefringence of $30 \times 10^{-3}$ to $48 \times 10^{-3}$ (more preferably $36 \times 10^{-3}$ to $45 \times 10^{-3}$) and preferably shows an elastic recovery of 50 to 80% (more preferably 60 to 75%) at 50% elongation of the film.

The birefringence of the polyolefin film can be measured under a crossed nicols using a polarizing microscope and a Berek compensator. The elastic recovery is obtained by the following formula (1) or (2). Formula (1) is for a polypropylene film or other high melting point polyolefin film I, and formula (2) is for a polyethylene film or other low melting point polyolefin film II.

In the determination of the elastic recovery, a strip of 10 mm x 50 mm of a polypropylene film is heat-treated at 150°C for 60 min., and mounted to a tensile strength tester at 25°C, 65%RH, for elongating the strip at a drawing rate of 50 mm/min., to give 100% elongation, and just after the 100% elongation relaxing the elongated strip at the same rate. As for the polyethylene film, a strip of 15 mm x 50 mm (2 inches) with no heat-treatment is mounted to a tensile strength tester at 25°C, 65%RH, for elongating (or drawing) the strip at a drawing rate of 50 mm/min., to give 50% elongation, keeping the 50% elongated film for 1 minute, and subsequently relaxing the elongated strip at the same rate.

$$\text{Elastic recovery(\%)= [(length at 100\% elongation) - (length of fully relaxed film after 100\% elongation)]/[length of film before elongation]} \qquad \text{Formula (1)}$$

$$\text{Elastic recovery(\%)= [(length at 50\% elongation) - (length of fully relaxed film after 50\% elongation)]/[(length of 50\% stretched film) - (length of film before elongation]} \qquad \text{Formula (2)}$$

Each of the polypropylene film and polyethylene film preferably has a thickness in the range of 3 to 20 μm, more

preferably 6 to 15 μm. An appropriate thickness can be chosen from the viewpoints of the desired thickness of the porous polyolefin film laminate obtained by the stretching procedure and the desired use of the porous film.

The polypropylene film(s) and polyethylene film(s) can be preferably united by pressing laminated films with heating. It is preferred that the laminated films comprise two polypropylene films and one intervening polyethylene film. The resulting porous polyolefin film laminate of the two polypropylene films and one intervening polyethylene film favorably shows little curling, high resistance to external damage, high thermal durability, and high mechanical strength. Accordingly, the porous polyolefin film laminate of the two polypropylene films and one intervening polyethylene film is advantageously employable as a battery separator which requires specific characteristics such as high safety and high reliability.

For simplifying the description of the process for preparing the porous polyolefin film laminate of the invention, the following description is mainly addressed to the preferred three film structure of polypropylene film - polyethylene film - polypropylene film.

The heated (that is, heat-treated) polypropylene films and the heated (that is, heat-treated) polyethylene film are wound out from respective raw film feed rolls and are passed together through a pair of heated nip rolls under pressure to give a united film. The application of pressure under heating is adopted for combining the polypropylene and polyethylene films to give a united film structure with little lowering of birefringence and elastic recovery. The nip rolls are preferably heated to 120-140°C. The temperature of the nip rolls means a temperature for heating the passing films. In other word, the step of combining the polymer films is preferably performed at a temperature between the melting temperature of the polymer film II and a temperature of higher than the melting point by 10°C, preferably by 5°C. If the heating temperature is too low, the polypropylene films (or the polymer films I) in the united film are easily separated when the united film is subjected to the following stretching procedure. If the heating temperature is too high, the polyethylene film melts to decrease the birefringence and elastic recovery. Therefore, the resulting porous polyolefin film laminate may not have the desired characteristics. The pressure applied by the nip rolls preferably is in the range of 1 to 3 kg/cm$^2$ (linear pressure), and the wind-out speed preferably is in the range of 0.5 to 8 m/min.

The united film produced by the application of heat and pressure to the polypropylene - polyethylene - polypropylene films preferably has a resistance to separation (i.e., peel strength) of not less than 3 g/15 mm, generally in the range of 3 to 60 g/15 mm, and a thickness of 15 to 60 μm.

The united film laminate can be heat-treated prior to stretching. The heat treatment can be done at a constant length or under application of 3 to 10% tension using an oven with circulating heated air or a heat roll, generally at a temperature of 110 to 140°C, preferably at a temperature of 115 to 130°C. The heat treatment can be conducted for 3 sec. to 3 min.

The stretching procedure is conducted twice, that is, a first low temperature stretching and a second high temperature stretching. Only a single stretching procedure can give unsatisfactory porous structure or poor resistance to film separation.

The low temperature stretching is performed utilizing difference of circumferential velocity between a series of draft rolls.

The low temperature stretching is performed preferably at -20°C to +50°C, more preferably 20 to 35°C. If the temperature is too low, the film under stretching may be broken, and if the temperature is too high, enough pore volume may not be obtained. The draw ratio for the low temperature stretching preferably is in the range of 5 to 200%, more preferably in the range of 10 to 100%. If the draft ratio is too low, the desired pore volume may not be obtained. If the draft ratio is too high, the desired pore volume as well as the desired pore size may not be obtained.

The draft ratio of the low temperature stretching ($E_1$) is defined in the following formula (3) wherein $L_1$ means the length of the film after the low temperature stretching and $L_0$ means the length of the film before the low temperature stretching.

$$E_1 = [(L_1 - L_0)/L_0] \times 100 \qquad \text{Formula (3)}$$

The film having been subjected to the low temperature stretching is subsequently stretched at a high temperature. The high temperature stretching is generally conducted in an oven with circulating heated air utilizing difference of circumferential velocity between a series of draft rolls. There is no specific limitation with respect to numbers of the draft rolls for the use in the high temperature stretching. Generally, 7 to 14 sets of the draft rolls are employed.

The high temperature stretching is performed preferably at 70°C to 130°C, more preferably 100 to 128°C. If the stretching temperature is outside the above range, enough pore volume may not be obtained. The high temperature stretching is preferably conducted at a temperature higher than the that of the low temperature stretching by 40 to 100°C. The draw ratio preferably is in the range of 100 to 400%. If the draft ratio is too low, the gas permeability rate of the resulting film may become too low. If the draft ratio is too high, the gas permeability rate may become too high. Accordingly, the above-mentioned range is preferred.

The draft ratio of the high temperature stretching ($E_2$) is defined in the following formula (4) wherein $L_2$ means the

length of the film after the high temperature stretching and $L_1$ means the length of the film after the low temperature stretching.

$$E_2 = [(L_2 - L_1)/L_1] \times 100 \qquad\qquad \text{Formula (4)}$$

The film having been subjected to the low temperature stretching and the subsequent high temperature stretching then can be heat-treated at a temperature higher than the temperature of the high temperature stretching by 0 to 45°C.

The heat-treatment can be conducted, for instance, by heat-shrinking of the stretched film by up to 50%, preferably 10 to 50%, so as to prevent the shrinkage caused by the residual stress in the stretched film or by thermosetting which comprises heating the stretched film under defining the heated film to keep the film length constant. The heat-treatment is conducted to give the desired porous polyolefin film laminate having a high dimensional stability in addition to the desired resistance to the film separation.

The porous polyolefin film laminate of the invention can have a pore volume in the range of 30 to 80%, preferably 35 to 60%, and a maximum pore size of 0.02 to 2 μm, preferably 0.08 to 0.5 μm. The pore volume and maximum pore size may be influenced by the selection of the conditions of the preparing process. If the pore volume is too small, the obtained film is not appropriate for the use as a battery separator. If the pore volume is too large, the film shows poor mechanical strength. If the maximum pore size is too small, the obtained film is not appropriate for the use as a battery separator or a condenser separator because enough ionic movement is not accomplished. Such small pore size is still not appropriate for the use as a filter in clinical treatment, water purifier, air conditioning, etc., because filtration pressure becomes too high. If the maximum pore size is too large, excessively large ionic movement takes place in the use as a battery separator or a condenser separator. In the use as a filter in a water-treatment apparatus, the expected enough removal of microorganisms or virus cannot be attained. The porous film having too large pores is also inappropriate for the use as a filter for purifying blood plasma in the clinical treatment.

The porous polyolefin film laminate of the invention preferably has a gas permeability in the range of 150 to 1,500 (more preferably 300 to 800) in terms of Gurley Number. In the use as a battery separator, too low gas permeability results in undesirable low ion flow. Too high gas permeability results in excessively large ion flow, which may cause extremely high temperature increase when troubles happen in the battery.

The porous polyolefin film laminate of the invention preferably has a united structure with a peel strength of at least 3 g/15 mm, generally 3 to 60 g/15 mm. If the peel strength is too low, the constitutional films of the porous polyolefin film laminate may peel off, for instance, in the incorporation of the porous multi-film separator film into a battery. An excessively low peel strength may cause large curling tendency and undesirable film stretching.

An appropriate thickness of the porous polyolefin film laminate of the invention can be determined depending upon the desired use of the film. Therefore, there is no specific limitation with respect to the thickness of the porous polyolefin film laminate of the invention. Generally, the thickness for the battery separator film is in the range of 15 to 60 μm, from the viewpoints of mechanical strength, performance, and requirement to minimize the battery.

The invention is further described by the following non-limitative examples.

### Example 1

Polypropylene (number average molecular weight: 70,000, weight average molecular weight: 480,000, melt index: 3, Ube Polypro F103EA, available from Ube Industries Ltd.) was melt-extruded at 200°C using a T-die (discharge width: 1,000 mm, discharge lip opening: 4 mm). The discharged film was sent to a cooling roll kept at 90°C and cooled by applying a cooled air (25°C). The cooled film was then collected around a core roll at a rate of 40 m/min. and a draft ratio of 366. The core roll was made of paper and had a diameter of 3 inches. The polypropylene film collected around the core roll had a length of 3,500 m. The polypropylene film had a thickness of 11.5 μm, a birefringence of 17.0 x 10$^{-3}$, and an elastic recovery of 75.3% at 100% elongation of the film.

The polypropylene film collected around the core roll was heated to 120°C for 24 hours in an air-circulating oven (PS-222, available from Tabai Seisakusho Co., Ltd.) and then taken out of the oven for cooling to room temperature. Thus heated polypropylene film had a birefringence of 20.1 x 10$^{-3}$, and an elastic recovery of 90.5% at 100% elongation of the film.

Independently, high density polyethylene (density: 0.968 g/cm$^2$, melt index: 5.5, Hizex 2208J, available from Mitsui Petrochemical Co., Ltd.) was melt-extruded at 173°C using a T-die (discharge width: 1,000 mm, discharge lip opening: 2 mm). The discharged film was sent to a cooling roll kept to 115°C and cooled by applying a cooled air (25°C). The cooled film was then collected around a core roll at a rate of 20 m/min. and a draft ratio of 250. The core roll was made of paper and had a diameter of 3 inches. The polyethylene film collected around the core roll had a length of 3,500 m. The polyethylene film had a thickness of 8 μm, a birefringence of 36.0 x 10$^{-3}$, and an elastic recovery of 42.0% at 50% elongation of the film.

The polyethylene film collected around the core roll was heated to 95°C for 24 hours in an air-circulating oven (PS-222, available from Tabai Seisakusho Co., Ltd.) and then taken out of the oven for cooling to room temperature. Thus heated polyethylene film had a birefringence of 40.5 x 10$^{-3}$, and an elastic recovery of 72.5% at 50% elongation of the film.

A laminated three film composed of two polypropylene films and one intervening polyethylene film was prepared in the following manner using the heat-treated polypropylene film and polyethylene film.

Two sheets of the heat-treated polypropylene films and one sheet of the heat-treated polyethylene film were wound out from respective feed roll stands at a rate of 4.0 m/min. The heat-treated films were passed through heating rolls to combine the films at 134°C and 1.8 kg/cm (linear pressure), and then collected by a cooling roll (cooled to 50°C) at the same rate. The tensions applied for winding out the heat-treated films were 3 kg for the polypropylene films and 0.9 kg for the polyethylene film. The resulting film laminate had a thickness of 31 μm.

The film laminate was then stretched to give 20% stretching by means of a set of nip rolls (kept at 35°C, distance between these nip rolls: 350 mm, feeding rate: 1.6 m/min.). The film was subsequently sent into an oven with circulating heated air (heated to 126°C) for stretching the heated film to give total 180% stretching utilizing difference of circumferential rate of the employed rolls. The twice stretched film was then heated on a roll to 126°C for 25 seconds to attain 36% relaxation. In this manner, a continuous porous polyolefin film laminate was obtained.

The obtained porous polyolefin film laminate was measured in its thickness, pore volume, maximum pore size, pore specific surface, gas permeability, tensile strength, tensile modulus, shutdown (SD) temperature, thermal durability, peeling strength, and shrinkage ratio. The results are set forth in Table 1. The porous polyolefin film laminate had almost no curling and no pinholes.

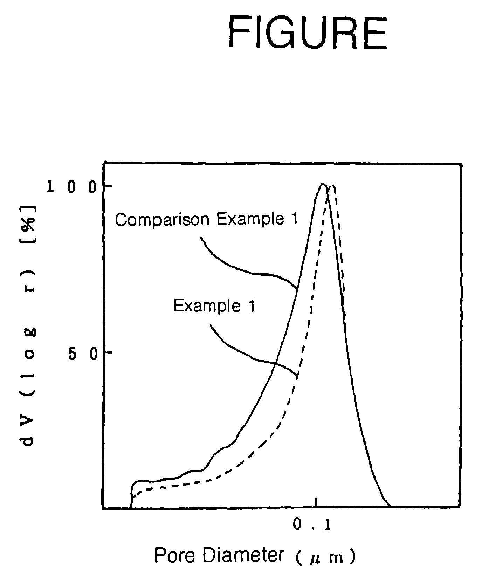

The pore size distribution of the resulting porous polyolefin film laminate is illustrated in the attached Figure by a dotted line, wherein the axis of ordinates is for logarithmic pore distribution function [dV(log r)] (%), and the axis of abscissas is for pore diameter (μm).

The pore volume, maximum pore size and pore specific surface were measured by a mercury porosimeter (available from Yuasa Ionic Co., Ltd.), and the gas permeability (in terms of Gurley number) was determined by the method of JIS P8117 (corresponding to ASTM D-726). The tensile strength and tensile modulus were measured by the method of ASTM D-822. The peel strength was determined at 25°C, 65%RH using a strip of 15 mm wide which was in part peeled on the interface at which the peel strength was to be determined and drawing under T-peeling the strip of 75 mm at a rate of 500 mm/min.

The shutdown behavior, shutdown temperature (shutdown starting temperature), and thermal durability were determined by the steps of heating the film specimen wholly fixed to a holder of 60 mm diameter inside an oven with circulating air heated to the preset temperature for one minute, taking out the heated film specimen to cool it still under the fixed condition to room temperature, and measuring the gas permeability (defined in JIS P8117 corresponding to ASTM D-822).

The thermal shrinkage ratio was measured by heating a sample film (250 mm x 250 mm) to 105°C for 8 hours in an air-circulating oven and cooling the heated sample to room temperature. The heat shrinkage ratio (%) was determined by the length of the sample before the heat treatment (L$_4$) and the length of the sample after the heat treatment (L$_3$) according to the following equation.

$$\text{Heat shrinkage ratio (\%)} = (L_3 - L_4)/L_3 \times 100$$

Example 2

The procedures of Example 1 were repeated except that 136°C was adopted for combining the heat-treated polypropylene and polyolefin films in place of 134°C to give the film laminate. Thus, a continuous porous polyolefin film laminate comprising two polypropylene films between which one polyethylene film was intervened.

The porous polyolefin film laminate was subjected to various measurements in the same manner as in Example 1. The results of measurements are set forth in Table 1. The porous polyolefin film laminate had almost no curling and no pinholes.

Comparison Example 1

The procedures of Example 1 were repeated to collect each of polypropylene film and polyethylene film around the core roll. These films were then subjected to the below-mentioned procedures with no heat treatment which was adopted in Example 1.

Two sheets of the polypropylene films and one sheet of the polyethylene film were wound out from respective feed roll stands at a rate of 4.0 m/min. The films were passed through heating rolls to combine the films at 134°C and 1.8 kg/cm (linear pressure), and then collected by a cooling roll (cooled to 50°C) at the same rate. The tensions applied for winding out the films were 3 kg for the polypropylene films and 0.9 kg for the polyethylene film. The resulting film laminate was composed of two polypropylene films and one polyethylene film intervening between the polypropylene films.

The film laminate was unwound to pass through an air-circulating oven (heated to 125°C, retention time: 113 sec.) under the tension to extend the film by 5%.

A portion of thus heat treated film laminate was cut off, and each film layer was peeled off to determine a birefringence and an elastic recovery of each of the polypropylene film and polyethylene film. The results are as follows:

Polypropylene film:

birefringence:     $22.5 \times 10^{-3}$
elastic recovery:     90.4% (at 100% elongation)

Polyethylene film:

birefringence:     $39.4 \times 10^{-3}$
elastic recovery:     52.5% (at 50% elongation)

The film laminate was then stretched in the same manner as those of Example 1 to give a continuous porous polyolefin film laminate.

The porous polyolefin film laminate was subjected to various measurements in the same manner as in Example 1. The results of measurements are set forth in Table 1. The porous polyolefin film laminate had almost no curling and no pinholes. The pore size distribution of the resulting porous polyolefin film laminate is illustrated in the attached Figure by a solid line.

Example 3

The procedures of Example 1 were repeated except that the collected polypropylene film was heated to 125°C (in place of 120°C) and the collected polyethylene film was heated to 100°C (in place of 95°C).

The heat-treated polypropylene film had a birefringence of $20.8 \times 10^{-3}$ and an elastic recovery of 91.3% (at 100% elongation), while the heat-treated polyethylene film had a birefringence of $40.3 \times 10^{-3}$ and an elastic recovery of 74.1% (at 50% elongation)

The heat-treated polypropylene film and polyethylene film were combine and stretched in the same manner as in Example 1. Thus, a continuous porous polyolefin film laminate comprising two polypropylene films between which one polyethylene film was intervened.

The porous polyolefin film laminate was subjected to various measurements in the same manner as in Example 1. The results of measurements are set forth in Table 1. The porous polyolefin film laminate had almost no curling and no pinholes.

Comparison Example 2

The procedures of Example 1 were repeated except that 128°C (in place of 134°C) was adopted for combining the heat-treated polypropylene and polyolefin films to give the film laminate. Thus, a continuous porous polyolefin film laminate comprising two polypropylene films between which one polyethylene film was intervened.

The porous polyolefin film laminate was subjected to various measurements in the same manner as in Example 1. The results of measurements are set forth in Table 1.

Comparison Example 3

The procedures of Example 1 were repeated except that the collected polypropylene film was heated to 95°C (in place of 120°C) and the collected polyethylene film was heated to 75°C (in place of 95°C).

The heat-treated polypropylene film had a birefringence of $19.2 \times 10^{-3}$ and an elastic recovery of 79.3% (at 100% elongation), while the heat-treated polyethylene film had a birefringence of $38.1 \times 10^{-3}$ and an elastic recovery of 48.0% (at 50% elongation)

The heat-treated polypropylene film and polyethylene film were combine and stretched in the same manner as in Example 1. Thus, a continuous porous polyolefin film laminate comprising two polypropylene films between which one polyethylene film was intervened.

The porous polyolefin film laminate was subjected to various measurements in the same manner as in Example 1. The results of measurements are set forth in Table 1.

Table 1

| | | Example | | | Comparison Example | | |
|---|---|---|---|---|---|---|---|
| | | 1 | 2 | 3 | 1 | 2 | 3 |
| Film thickness(μm) | | 25 | 26 | 25 | 25 | 25 | 25 |
| Pore volume (%) | | 43.4 | 43.8 | 44.1 | 44.3 | 43.1 | 43.3 |
| Max. pore size(μm) | | .1224 | .1251 | .1253 | .1240 | .1260 | .1270 |
| Pore specific surface area (m$^2$/g) | | 63 | 60 | 60 | 54 | 52 | 52 |
| Gas permeability (sec./100cc) | | 520 | 560 | 550 | 490 | 800 | 1500 |
| Tensile strength (kg/cm$^2$) | MD | 1300 | 1300 | 1300 | 1300 | 1300 | 1300 |
| | TD | 125 | 120 | 130 | 120 | 120 | 120 |
| SD temperature(°C) | | 130 | 130 | 130 | 135 | 130 | 135 |
| Thermal stability (°C) | | 190 | 190 | 190 | 190 | 190 | 190 |
| Peel strength (g/15mm) | | 24 | 28 | 20 | 18 | 10 | 20 |
| Heat Shrinkage(%) | | 11 | 12 | 12 | 22 | 18 | 25 |

Each of the porous polyolefin film laminate of the invention (Examples 1 to 3) shows a SD temperature of 130°C which is lower than the melting point of the melting point of the employed polyethylene film (135°C). This means that the porous polyolefin film laminates of the invention gives the desired shut-down not by melting or fusion of the polyethylene film but its heat shrinkage.

## Claims

1. A process for preparing a porous polyolefin film laminate which comprises the steps of:

   heating a polyolefin film I to a temperature lower than its melting point by 35-55°C under the condition of essentially tension free;
   heating a polyolefin film II to a temperature lower than its melting point by 30-55°C under the condition of essentially tension free, the polyolefin film II having a melting point lower than the melting point of the polyolefin film I by at least 20°C;
   combining at least three polyolefin films which comprise at least one heated polyolefin film I and at least one heated polyolefin film II under pressure at a temperature between the melting point of the polyolefin film II and a temperature higher than the melting point of the polyolefin film II by 10°C, to form a united film laminate;
   stretching the united film laminate at a temperature of -20°C to +50°C by 5 to 200%;
   stretching further the once stretched film laminate at a temperature of 70 to 130°C by 100 to 400%;
       and
   heating the last stretched film laminate for fixing the stretched state, optionally after shrinking the last stretched film laminate up to 50%.

2. The process of claim 1, wherein the polyolefin film I is a polypropylene film and the polyolefin film II is a polyethylene film.

3. The process of claim 1, wherein the steps of heating the polyolefin films I and II are performed under the condition that each polyolefin film is rolled up.

4. The process of claim 1, wherein the step of combining at least three polyolefin films is performed under the condition that the polyolefin film I is arranged on both surface sides.

5. The process of claim 1, wherein the step of combining at least three polyolefin films is performed under the condition that one polyolefin film II is sandwiched between two polyolefin films I.

6. The process of claim 1, wherein the heated polyolefin film I has a birefringence of $15 \times 10^{-3}$ to $21 \times 10^{-3}$ and shows an elastic recovery of 80 to 94% at 100% elongation of the film, while the heated polyolefin film II has a birefringence of $30 \times 10^{-3}$ to $48 \times 10^{-3}$ and shows an elastic recovery of 50 to 80% at 50% elongation of the film.

7. A porous polyolefin film laminate comprising at least three polyolefin films, at least two of which are polyolefin films I and at least one of which a polyolefin film II having a melting point lower than those of the polyolefin films I by at least 20°C, the polyolefin film II being sandwiched with the polyolefin films I, said at least three polyolefin films being combined to form a united laminate which has a pore volume in the range of 30 to 80%, a maximum pore size in the range of 0.02 to 2 $\mu$m, and a shutdown temperature which is lower than the melting point of the polyolefin film II by 1-5°C.

8. The porous polyolefin film laminate of claim 7, wherein the polyolefin films I are stretched polypropylene films and the polyolefin film II is a stretched polyethylene film.

9. The porous polyolefin film laminate of claim 7, wherein the shutdown is attained by heat shrinkage of the polyolefin film II.

10. The porous polyolefin film laminate of claim 7, wherein the film laminate shows a thermal durability to maintain the shutdown condition up to at least 180°C.

11. The porous polyolefin film laminate of claim 7, wherein the film laminate shows a peel strength of at least 3 g/15 mm.

12. The porous polyolefin film laminate of claim 7, which has a gas permeability in the range of 150 to 1,500 in terms of Gurley Number.

13. A separator film to separate a positive electrode from a negative electrode in a nonaqueous lithium ion battery, which comprises the porous polyolefin film laminate of claim 7.

# FIGURE

**European Patent Office**

## EUROPEAN SEARCH REPORT

Application Number

EP 97 11 3558

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | EP 0 682 376 A (UBE INDUSTRIES)<br><br>* claims 1,4; figure 1; example 1 *<br>--- | 1,2,4-8,<br>10-13 | H01M2/16<br>B32B27/32 |
| A | EP 0 718 901 A (HOECHST CELANESE CORP)<br>* claims 1,14; example *<br>--- | 1,2,4,5 | |
| A | EP 0 454 420 A (OKURA INDUSTRIAL CO LTD<br>;SUMITOMO CHEMICAL CO (JP))<br>* claims 7,8; example 2 *<br>----- | 1,2 | |

TECHNICAL FIELDS
SEARCHED     (Int.Cl.6)

H01M
B32B

The present search report has been drawn up for all claims

| Place of search | Date of completion of the search | Examiner |
|---|---|---|
| THE HAGUE | 3 December 1997 | Andrews, M |